# DEMANDE DE BREVET EUROPEEN

(11) **EP 0 856 450 A1**
(43) Date de publication de la demande: **05.08.1998**
(21) Numéro de dépôt: 97116066.8
(22) Date de dépôt: 16.09.1997
(51) Int. Cl.: B61D 45/00, B60P 7/135

(54) **Agencement d'immobilisation de charges sur un véhicule de transport de charges**

(30) Priorité: 04.11.1996 BE 9600929
(71) Demandeur: N.V. Technirail S.A., 1000 Bruxelles (BE)
(72) Inventeur: Triphon, Maenhout, 9900 Eeklo (BE)
(74) Mandataire: Vanhamme, Joseph Louis

(57) **Abrégé**

L'invention concerne un agencement d'immobilisation de charges sur un véhicule de transport de charges, tel qu'un wagon ferroviaire.

L'agencement est du type comprenant des moyens d'immobilisation des charges posées sur le plancher du véhicule, susceptibles d'être fixés amoviblement au plancher. Il est caractérisé en ce que les moyens d'immobilisation comprennent au moins deux profilés (3) parallèles et perpendiculaires à l'axe (X-X) du véhicule (1), qui sont intégrés dans le plancher (4) au même niveau que celui-ci, et au moins deux éléments d'immobilisation de charges (15), de forme allongée, qui s'étendent parallèlement l'un à l'autre et à l'axe du plancher 4 et sont sélectivement déplaçables en translation sur les profilés (3) entre au moins une position verrouillable (a) sur les profilés (3) pour l'immobilisation des charges entre eux et une position escamotée (b) dans le plancher (4).

L'invention est utilisable pour des wagons ferroviaires.

## Description

L'invention concerne un agencement d'immobilisation de charges sur un véhicule de transport de charges, tel qu'un wagon ferroviaire, du type comprenant des moyens d'immobilisation des charges posées sur le plancher du wagon et susceptibles d'être fixés amoviblement au plancher.

Des marchandises de diverses natures et de formes géométriques, sont fréquemment transportées par chemin de fer sur des wagons plats sur lesquels elles sont simplement déposées. C'est le cas, en particulier des palettes chargées de produits rendus solidaires de celles-ci par un emballage provisoire, ainsi que d'unités de charge telles que rouleaux de papier, futs et analogues.

Ces charges doivent avoir une position assez précise par rapport à l'axe longitudinal du wagon afin d'éviter un délestage trop important des roues d'un côté ou de l'autre du wagon. Ce positionnement est une règle de base dans la réglementation ferroviaire internationale. D'autre part, il est nécessaire d'empêcher le glissement latéral de ces charges sous le fait des vibrations et du devers de la voie en courbe.

Dans ce but, des agencements d'immobilisation de charge, qui sont connus, comportent des chevrons qui sont fixés au plancher en bois des wagons, de façon à immobiliser les charges dans l'axe longitudinal de ceux-ci. Les dimensions des charges étant variables, ces chevrons doivent être placés et enlevés lors de chaque transport, ce qui entraîne une consommation non négligeable de chevrons et des pertes de temps aussi bien pour les clients que pour les services des chemins de fer.

La présente invention a pour but de proposer un agencement d'immobilisation de charges, du type indiqué plus haut, qui permet une mise en place et un retrait très rapide des charges, tout en faisant partie intégrante du véhicule.

Pour atteindre ce but, l'agencement selon l'invention est caractérisé en ce que les moyens d'immobilisation comprennent au moins deux profilés parallèles et perpendiculaires à l'axe du véhicule, qui sont intégrés dans le plancher au même niveau que celui-ci, et au moins deux éléments d'immobilisation de charges, de forme allongée, qui s'étendent parallèlement l'un à l'autre et l'axe du plancher et sont sélectivement déplaçables en translation sur les profilés, entre au moins une position verrouillable sur les profilés pour l'immobilisation des charges et une position escamotée dans le plancher.

Selon une caractéristique avantageuse de l'invention, les profilés comprennent des encoches et les éléments d'immobilisation sont pourvus de taquets s'engageant dans les encoches dans la position verrouillée d'immobilisation de ces éléments.

Selon une autre caractéristique avantageuse de l'invention, les profilés et les éléments d'immobilisation comprennent des moyens de déplacement guidé des éléments sur les profilés, ces moyens étant avantageusement formés par une rainure pratiquée dans chaque profité et des tenons associés aux éléments, susceptibles de s'engager dans les rainures.

Selon une autre caractéristique avantageuse de l'invention, les éléments d'immobilisation sont déplaçables en translation jusqu'à l'extrémité de la paire de profilés est susceptible de pivoter en étant guidé dans les profilés, entre leur position sur les profilés et la position escamotée dans le plancher.

Selon encore une autre caractéristique avantageuse de l'invention, chaque élément d'immobilisation comporte une poignée de manipulation.

Selon encore une autre caractéristique avantageuse de l'invention, les profilés présentent la forme d'un U renversé et les encoches et la rainure de guidage sont pratiqués dans la base du U se trouvant au niveau du plancher.

Selon une autre caractéristique avantageuse de l'invention, les éléments d'immobilisation sont réalisés sous forme de cornières.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un seul mode de réalisation de l'invention et dans lequel :
la figure 1 est une vue latérale d'une partie d'un wagon ferroviaire équipé d'un agencement d'immobilisation de charges selon la présente invention;
- la figure 2 est une vue de dessus du wagon selon la figure 1;
- la figure 3 est une vue en perspective, à plus grande échelle, de la partie indiquée en III sur la figure 2, dans la direction de la flèche, les cornières ayant été omises;
- la figure 4 est une vue en perspective des cornières d'immobilisation de l'agencement selon l'invention, et
- les figures 5 et 6 sont de vues en coupe le long des lignes respectivement V et VI des figures 2 à 4.

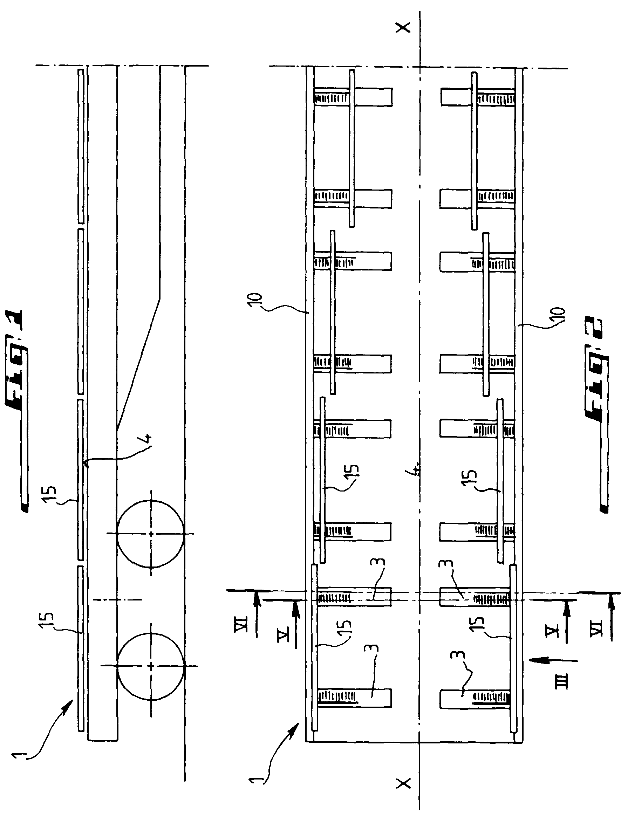

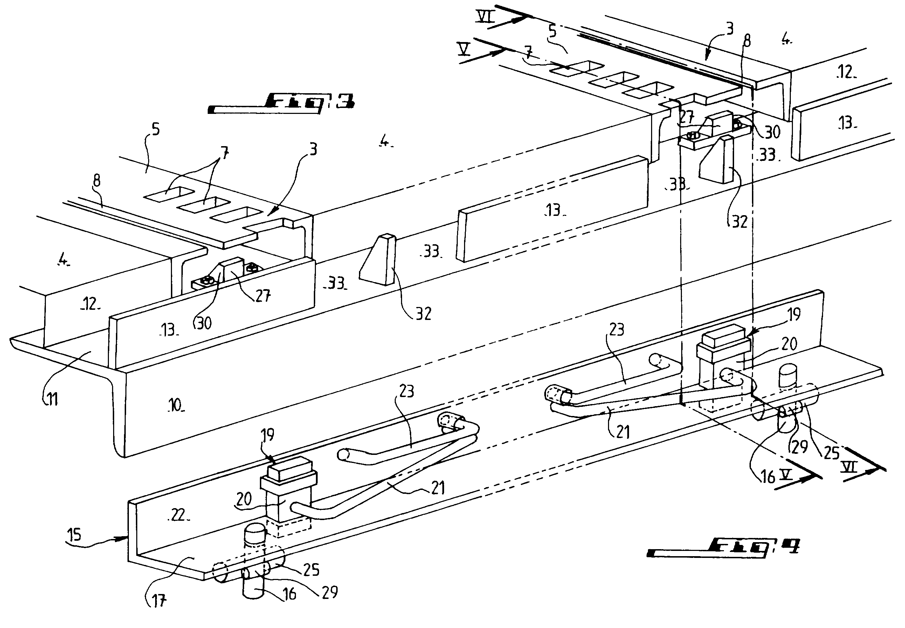

L'invention sera décrit ci-après dans son application à un wagon ferroviaire 1 représenté schématiquement sur les figures 1 et 2. L'agencement selon l'invention comprend des profilés en forme d'un U renversé 3 qui sont intégrés dans le plancher 4 de façon que la surface supérieure de leurs âmes 5 se trouve au niveau de la face supérieure du plancher sur lesquels les marchandises doivent être posées et immobilisées. Comme le montre la figure 2, les profilés 3 sont arrangés par paire de part et d'autre de l'axe longitudinal XX du wagon. Les profilés s'étendent perpendiculairement à cet axe et sont disposés de façon qu'un profilé d'une paire situé d'un côté de l'axe X-X soit aligné avec un profilé d'une paire situé de l'autre côté de l'axe. Comme on le voit clairement sur la figure 3, les âmes 5 des profilés sont percées d'une série d'encoches rectangulaires 7 équidistantes dans la direction de l'axe des profilés. L'âme de chaque profilé comporte en outre une rainure 8 qui s'étend parallèlement à l'axe du profilé et à la série des encoches 7. Cette rainure est ouverte à l'extrémité de son profilé, qui est adjacente au bord longitudinal du châssis du wagon, qui est formé par un profilé en L 10. On constate que le plancher 4 dans lequel les profilés sont intégrés, ne s'étend pas jusqu'au bord extérieur du châssis 10 de façon qu'une gouttière longitudinale 11 soit formée entre l'extrémité longitudinale 12 du plancher et un fer plat 13 soudé au bord du châssis et ayant la même hauteur que le plancher 4.

En se référant à nouveau aux figures 1 et 2, on constate que le plancher comporte, réparti dans l'axe du wagon, un certain nombre de paires de profilés 3 et qu'à chaque paire est associée une cornière 15 à branches égales. Ces cornières s'étendent parallèlement à l'axe X-X du wagon et sont déplaçables en translation chacune sur une paire de profilés 3 entre une position d'immobilisation d'une charge et une position escamotée dans le plancher, comme cela est montré plus en détail sur les figures 5 et 6 sur lesquelles les deux positions sont indiquées respectivement par les lettres a et b.

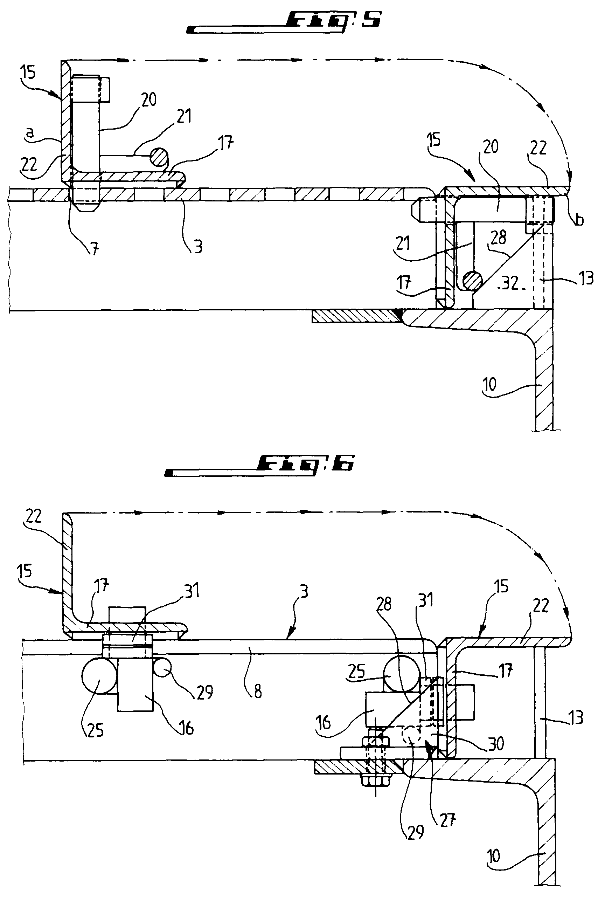

En se référant notamment à la figure 4, on voit que chaque cornière 15 comprend, associé à chaque profilé 3, un dispositif de guidage 16 lors de son déplacement sur le profilé, qui est constitué essentiellement d'un axe soudé à l'aile 17 de la cornière en contact avec le plancher du wagon. Cet axe fait saillie de la face externe de l'aile 17, perpendiculairement, de façon à pouvoir s'engager dans la rainure de guidage 8 du profilé 3. La cornière comporte en outre, pour chaque profilé 3, un dispositif de verrouillage 19 constitué d'un taquet mobile 20 traversant un évidement pratiqué dans l'aile 17 de la cornière 15 et fixé à l'extrémité d'un levier 21 qui est monté pivotant sur l'aile 22 de la cornière. Le levier 21 est pourvu d'une poignée d'actionnement 23 qui est solidaire du levier. Le taquet mobile 20 permet le verrouillage de la cornière 17 dans les encoches 7 du profité 3 et est à cette fin susceptible de pivoter entre une position d'engagement dans une encoche 7, en traversant l'aile 17 de la cornière, et une position de déverrouillage dans laquelle il ne traverse pas l'aile de la cornière.

Grâce aux deux dispositifs de guidage 16 et aux deux dispositifs de verrouillage 19, chaque cornière est déplaçable en translation sur la paire de profilés 3 à laquelle elle est associée et verrouillable dans une position plus ou moins rapprochée de l'axe X-X du wagon. Les poignées 23 solidaires des leviers 21 permettent le verrouillage, le déverrouillage et le déplacement de la cornière vers une autre position de blocage et l'escamotage.

L'agencement selon l'invention comprend encore des moyens permettant d'escamoter la cornière 15 dans le plancher, c est-à-dire dans la gouttière longitudinale 11. Ces moyens comprennent un axe 25 soudé transversalement à l'axe de guidage 16 de façon à s'opposer au soulèvement de la cornière et, associée à chaque axe 25, une butée 27 fixée sur la poutre de châssis 10 en dessous de la rainure de guidage 8 au niveau de l'extrémité du profité 3. Cette butée 27 présente une face de butée inclinée 28 sur laquelle vient en appui l'axe 25 de la cornière 15 dans sa position d'escamotée, comme le montre clairement la figure 6. Cette dernière montre aussi que, pour amener la cornière 15 dans cette position, on la déplace vers le bord du plancher. L'axe 25 vient alors en contact de la butée 27 et la cornière peut être amenée à effectuer une rotation de 90° autour de l'axe 25 pour se loger dans la gouttière 11 en s'appuyant par l'extrémité de son aile 22 sur le fer plat 13. On constate que l'aile 17 de la cornière 15 présente une hauteur de façon que la tranche de l'aile 17 vient en appui sur le fond de la gouttière tout en assurant que l'aile 22 soit en alignement avec la surface du plancher 4. Grâce à l'appui de la gouttière sur le fond de la gouttière 11 et le fer plat 5, des chariots élévateurs manipulants des charges peuvent passer librement sur les planches.

Lorsque la cornière d'immobilisation ou de blocage se trouve en position escamotée ou d'effacement, le dispositif de guidage 16 n'est plus en service et ne s'oppose plus au déplacement longitudinal de la cornière. Cet effet de blocage longitudinal est maintenant atteint, comme le montre la figure 6, par l'axe 16 qui vient en appui contre la face latérale 30 de la butée 27. Etant donné que le deuxième dispositif de guidage produit le même résultat de blocage au niveau de l'autre profilé 3, la cornière est bloquée dans les deux directions longitudinales.

Comme le montre la figure 3, l'agencement selon l'invention comporte encore une butée 31 pour chaque levier 21, qui présente une forme triangulaire et bloque automatiquement le taquet 20 et le levier 21 en position retirée, de sorte que la cornière 15, avec tous ses accessoires, se loge dans sa gouttière et assure la continuité entre le plancher et le fer plat 13.

Après la lecture de la description qui précède, on comprend que, lors du chargement du wagon, après avoir déposé les diverses charges sur le plancher 4, il suffit de saisir à deux mains successivement les poignées et leviers de verrouillage 23 et 21 des différentes cornières de calage par les ouvertures 33 qui ont été ménagées de part et d'autre de chaque butée 32 dans le fer plat 13, pour les faire effectuer une rotation de 90° et les pousser contre les charges à immobiliser, de part et d'autre du wagon. En relâchant les leviers 21, les taquets 20, en s'engageant dans les encoches 7 des profilés bloquent les cornières de calage. Au déchargement s'effectue l'opération inverse.

On constate que l'agencement selon l'invention est complètement escamotable, robuste et ne souffre pas du passage des chariots élévateurs chargés et la partie mobile est toujours liée au wagon, ce qui évite tout risque de perte.

## Revendications

1. Agencement d'immobilisation de charges sur un véhicule de transport de charges, tel qu'un wagon ferroviaire, du type comprenant des moyens d'immobilisation des charges posées sur le plancher du véhicule, susceptibles d'être fixés amoviblement au plancher, caractérisé en ce que les moyens d'immobilisation comprennent au moins deux profilés (3) parallèles et perpendiculaires à l'axe (X-X) du véhicule (1), qui sont intégrés dans le plancher (4) au même niveau que celui-ci, et au moins deux éléments d'immobilisation de charges (15), de forme allongée, qui s'étendent parallèlement l'un à l'autre et à l'axe du plancher 4 et sont sélectivement déplaçables en translation sur les profilés (3) entre au moins une position verrouillable (a) sur les profilés (3) pour l'immobilisation des charges entre eux et une position escamotée (b) dans le plancher (4).

2. Agencement selon la revendication 1, caractérisé en ce que les profilés (3) comprennent des encoches (7) et les éléments d'immobilisation (15) sont pourvus de taquets (20) s'engageant dans les encoches (7) dans la position verrouillée d'immobilisation (a) de ces éléments (15).

3. Agencement selon la revendication 2, caractérisé en ce que les profilés (3) et les éléments d'immobilisation (15) comprennent des moyens de déplacement guidés des éléments sur les profilés, ces moyens étant avantageusement formés par une rainure (8) pratiquée dans chaque profilé (3) et des axes (16) associés aux éléments, susceptibles de s'engager dans les rainures (8).

4. Agencement selon l'une des revendications 1 à 3, caractérisé en ce que les éléments d'immobilisation (15) sont déplaçables en translation jusqu'à l'extrémité de la paire de profilés (3) à laquelle ils sont associés, et susceptibles de pivoter en étant guidés dans ces profilés, entre leur position sur les profilés et la position escamotée (b) dans le plancher (4).

5. Agencement selon l'une des revendications 1 à 4, caractérisé en ce que les éléments d'immobilisation (15) sont escamotés dans une gouttière (11) formée dans le plancher (4), au niveau d'un bord longitudinal (10) du châssis du véhicule (1).

6. Agencement selon l'une des revendications 1 à 5, caractérisé en ce que les profilés (3) présentent la forme d'un U renversé et les encoches (7) et la rainure de guidage (8) sont pratiqués dans l'âme (5) du U, se trouvant au niveau du plancher (4).

7. Agencement selon l'une des revendications 1 à 6, caractérisé en ce que les éléments d'immobilisation de charges (15) sont réalisés sous forme de cornières.

8. Agencement selon la revendication 7, caractérisé en ce que chaque taquet de verrouillage (20) est mobile entre une position en saillie de la face extérieure de l'aile de cornière (17) en contact avec le profilé (3), et une position retirée et est fixée à cette fin à l'extrémité d'un levier (21) monté pivotant dans l'autre aile (22) de la cornière (15), une poignée d'actionnement (23) étant associée au levier (21).

9. Agencement selon l'une des revendications 4 à 8, caractérisé en ce qu'il comprend une butée (27) prévue sur le fond de la gouttière (11) et constituant un moyen d'appui de la cornière lors de son mouvement de pivotement entre sa position (a) sur le profilé et sa position escamotée (b) et un moyen de verrouillage de la cornière dans la direction longitudinale dans sa position escamotée.

10. Agencement selon l'une des revendications 4 à 9, caractérisé en ce qu'il comprend une butée d'appui(32) pour chaque levier pivotant (21) et des ouvertures d'accès au levier (33) à travers le fer plat (13).
